(19) Europäisches Patentamt / European Patent Office / Office européen des brevets

(11) **EP 4 264 203 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **21823218.9**

(22) Anmeldetag: **26.11.2021**

(51) Internationale Patentklassifikation (IPC):
**G01F 23/284** (2006.01) **G01S 13/88** (2006.01)
**H01Q 1/22** (2006.01)

(52) Gemeinsame Patentklassifikation (CPC):
**G01F 23/284; G01S 13/88; H01Q 1/225**

(86) Internationale Anmeldenummer:
**PCT/EP2021/083102**

(87) Internationale Veröffentlichungsnummer:
**WO 2022/128403 (23.06.2022 Gazette 2022/25)**

(54) **VERFAHREN ZUM ABGLEICH EINES HOCHFREQUENZ-BASIERTEN FELDGERÄTES UND HOCHFREQUENZ-BASIERTES FELDGERÄT**

METHOD FOR ADJUSTING A HIGH FREQUENCY BASED FIELD DEVICE AND HIGH FREQUENCY BASED FIELD DEVICE

PROCÉDÉ D'ÉQUILIBRAGE D'UN APPAREIL DE TERRAIN À BASE DE FRÉQUENCE RADIO ET APPAREIL DE TERRAIN À BASE DE FRÉQUENCE RADIO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2020 DE 102020134061**

(43) Veröffentlichungstag der Anmeldung:
**25.10.2023 Patentblatt 2023/43**

(73) Patentinhaber: **Endress+Hauser Flowtec AG 4153 Reinach (CH)**

(72) Erfinder:
• **PFLÜGER, Stefan 80995 München (DE)**
• **WEGNER, Christian 79739 Schwörstadt (DE)**

(74) Vertreter: **Endress + Hauser Group Services (Deutschland) AG+Co. KG Colmarer Straße 6 79576 Weil am Rhein (DE)**

(56) Entgegenhaltungen:
**DE-A1- 102014 107 249     DE-A1- 19 926 787 US-B2- 10 260 930**

## Beschreibung

Die Erfindung betrifft das Abgleichen eines Hochfrequenz-basierten Feldgerätes.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Mess-Verfahren. Eine Vielzahl verschiedener Feldgeräte-Typen wird von der Firmen-Gruppe Endress + Hauser hergestellt und vertrieben.

Zur Füllstandsmessung von Füllgütern in Behältern haben sich Radar-basierte Messverfahren etabliert, da sie robust und wartungsarm sind. Ein zentraler Vorteil Radar-basierter Messverfahren besteht in der Fähigkeit, den Füllstand quasi kontinuierlich messen zu können. Im Kontext dieser Patentanmeldung beziehen sich die Begriffe *"Radar"* bzw. *"Hochfrequenz"* auf entsprechende Signale mit Frequenzen zwischen 0.03 GHz und 300 GHz. Übliche Frequenzbänder, bei denen Füllstandsmessung durchgeführt wird, liegen bei 2 GHz, 26 GHz, 79 GHz, oder 120 GHz. Die bei Füllstandsmessung gängigen Messprinzipien bilden hierbei das Puls-Laufzeit-Prinzip (auch unter dem Begriff *"Pulsradar"* bekannt) sowie das FMCW-Prinzip *("Frequency Modulated Continuous Wave")*. Im Falle beider Messprinzipien wird ein Hochfrequenz-Signal gen Medium ausgesandt und eine Signal-Laufzeit des Hochfrequenz-Signals bis zum Empfang des an der Oberfläche des Mediums reflektierten Hochfrequenz-Signals ermittelt. Aus der Signal-Laufzeit lässt sich wiederum der Abstand zum Füllgut, beziehungsweise der Füllstand berechnen. Ein Füllstandsmessgerät, welches nach dem Puls-Laufzeit-Verfahren arbeitet, ist beispielsweise in der Offenlegungsschrift DE 102012 104 858 A1 beschrieben. Bezüglich eines typischen Aufbaus von FMCW-basierten Füllstandsmessgeräten sei exemplarisch auf die Offenlegungsschrift DE 10 2013 108 490 A1 verwiesen. Näher beschrieben werden die Messprinzipien von FMCW und Pulsradar außerdem in *"Radar Level Detection, Peter Devine, 2000".* In der Veröffentlichungsschrift DE 102014107249 A1 wird ein Füllstandsmessgerät gezeigt, das eine Schalt-Einheit umfasst, um den Sendepfad und Empfangspfad in einem gesonderten Testmodus über ein Dämpfungs-Element kurzzuschließen. Dabei dient der entsprechende Test zur Überprüfung der Funktionstüchtigkeit.

Aus dem Dielektrizitätswert (auch bekannt als *"Dielektrizitätskonstante"* oder *"Relative Permittivität")* können diverse Messgrößen vorliegenden Mediums abgeleitet werden, wie beispielsweise der Feuchtegehalt, die Stoffzusammensetzung oder etwaige Verunreinigungen. Daher ist die Bestimmung des Dielektrizitätswertes sowohl bei Feststoff-artigen Medien wie Zement oder Getreide, als auch bei flüssigen und gasförmigen Medien, wie beispielsweise bei Treibstoffen, Abwässern, Gasen oder Chemikalien von großem Interesse. Hierbei kann der Dielektrizitätswert prinzipiell sowohl bei lagernden als auch bei strömenden Medien bestimmt werden. Dementsprechend definiert sich der Begriff *"Behälter"* im Rahmen der Erfindung beispielsweise als Tank, Silo, Becken oder als Rohrleitungsabschnitt.

Neben dem induktiven- und kapazitiven Messprinzip zur Bestimmung des Dielektrizitätswertes können analog zu Füllstandsmessung auch Hochfrequenz-basierte Messprinzipien angewendet werden. Hierbei ist es neben dem TDR-Prinzip (*"Time Domain Reflectometry"*) möglich, den Dielektrizitätswert mittels transmittiver Hochfrequenz-Messung zu bestimmen. Im Fall dieses Messprinzips wird innerhalb des Behälters, welcher das zu untersuchende Medium enthält, ein Hochfrequenz-Signal mit zumindest einer definierten Frequenz bzw. Frequenz-Änderung in eine Messstrecke, die durch das Medium führt, eingekoppelt. Dabei wird nach Durchlauf durch die Messstrecke eine Amplitude/Amplitudenänderung, und/oder eine Phase/Phasenverschiebung gemessen, um hieraus beispielsweise auf Basis entsprechender Kalibrations-Messungen wiederum den Dielektrizitätswert zu bestimmen. Näher beschrieben ist ein transmittiv arbeitendes Dielektrizitätswert-Messgerät beispielsweise in der deutschen Veröffentlichungsschrift DE 10 2017 130 728 A1.

Sowohl bei Radar-basierter Füllstandsmessung, als auch bei transmittiver Dielektrizitätswert-Messung unterliegt das Hochfrequenz-Signal bei Durchgang durch die Messstrecke vor allem bei stark wasserhaltigen Medien und bei großen Messdistanzen einer hohen Signaldämpfung. Dementsprechend ist der Signalerzeugungs-Einheit zur Erzeugung des auszusendenden Hochfrequenz-Signals in der Regel ein Sende-Verstärker nachgeschaltet, bzw. ist der Auswertungs-Einheit zur besseren Verarbeitbarkeit des empfangenen Hochfrequenz-Signals ein Empfangs-Verstärker vorgeschaltet. Insbesondere solche Verstärker-Stufen rufen jedoch unvermeidbare Fehlereinflüsse auf. Beispiele hierfür sind Verkopplungen zwischen dem Sende- und Empfangs-Pfad sowie unerwünschte Reflektionen. Aufgrund der hohen Pegelunterschiede zwischen dem Ausgang des Sende-Verstärkers und dem Eingang des Empfangs-Verstärkers kommt es bei kompakter Bauweise daher unvermeidbar zu einer Verkopplung, welche das empfangene Hochfrequenz-Signal additiv überlagert.

Gängige Abgleichverfahren, wie bspw. das *"LMR16-Verfahren"* oder das *"SOLT-(SHORT, OPEN, LOAD, THRU) -Verfahren"* sind diesbezüglich allerdings wirkungslos, da durch Signal-Verstärkung bedingte Verkopplungen mittels dieser Abgleichs-Verfahren **nicht kompensiert** werden. Vielmehr werden die Verkopplungs-bedingten Fehler in den Abgleichsfaktoren dieser Abgleichs-Verfahren multipliziert. Näher erläutert ist das LMR16-Verfahren beispielsweise in *"LMR16 - A Self Calibration Procedure for a Leaky Network Analyzer, K. Silvonen, IEEE TRANSACTIONS ON MCIROWAVE THEORY AND TECHNIQUES, VOL. 7, JULY 1997"*. Das SOLT-Verfahren wird unter anderem in *"An*

Explicit Solution for the Scattering Parameters of a Linear Two-Port Measured with an Imperfect Test Set (Correspondence)", W. Kruppa and K. F. Sodomsky, IEEE TRANSACTIONS ON MCIROWAVE THEORY AND TECHNIQUES, JAN. 1971, VOL. 19, NO. 1, pp. 122-123" beschrieben.

Der Erfindung liegt daher die Aufgabe zugrunde, ein Hochfrequenz-basiertes Feldgerät bereitzustellen, dessen Messwert nicht durch interne Signal-Verstärkung verfälscht wird.

Die Erfindung löst diese Aufgabe durch das Verfahren gemäß Anspruch 1 zum Abgleich eines Hochfrequenz-basierten Feldgerätes, das zur Bestimmung einer Messgröße eines Mediums, insbesondere eines Füllstands oder eines Dielektrizitätswert des Mediums dient. Hierzu umfasst das Feldgerät folgende Komponenten:

- Eine derart am Behälter anbringbare Antennen-Anordnung, um

  o ein Hochfrequenz-Signal gen Medium auszusenden, und
  o um nach Interaktion mit dem Medium ein Empfangs-Signal zu empfangen,

- eine Signalerzeugungs-Einheit, die ausgelegt ist, um das auszusendende Hochfrequenz-Signal zu erzeugen und über einen Sende-Pfad der Antennen-Anordnung zuzuführen,
- Eine Auswertungs-Einheit, welche über einen Empfangs-Pfad derart mit der Antennen-Anordnung verbunden ist, um zumindest anhand des eingehenden Empfangs-Signals eine definierte Kenngröße zu bestimmen,
- einen im Sende-Pfad angeordneten Sende-Verstärker und/oder einen im Empfangs-Pfad angeordneten Empfangs-Verstärker,
- eine erste Schalt-Einheit, welche zwischen der Antennen-Anordnung und dem Sende-Verstärker im Sende-Pfad bzw. dem Empfangs-Verstärker im Empfangs-Pfad angeordnet ist. Dabei ist die erste Schalt-Einheit ausgelegt, derartige Schaltpositionen (i, j = THRU, ATN, GND, LOAD, OPEN) einzunehmen,

  o so dass die Signalerzeugungs-Einheit und/oder die Auswertungs-Einheit jeweils mit der Antennen-Anordnung verbunden sind/ist (i, j = THRU), und
  o so dass der Sende-Pfad und/oder der Empfangs-Pfad an ein Dämpfungs-Element, über welches der Sende-Pfad mit dem Empfangs-Pfad verbindbar ist, angeschlossen sind/ist, wobei die Antennen-Anordnung bei dieser Schaltposition von der Signalerzeugungs-Einheit bzw. von der Auswertungs-Einheit getrennt ist (i, j = ATN).

Im Rahmen der Erfindung bezieht sich der Begriff *"Interaktion"* im Falle von Füllstandsmessung auf die Reflektion des Hochfrequenz-Signals an der Füllgut-Oberfläche. Im Falle von Dielektrizitätswert-Messung bezieht sich dieser Begriff auf das Durchstrahlen des Mediums auf einer definierten Messstrecke, also zwischen der Sende-Antenne und der Empfangs-Antenne. Analog hierzu richtet sich der Begriff *"Messstrecke"* im Falle von Füllstandsmessung auf den Zwischenraum zwischen Füllstandsmessgerät und Füllgut-Oberfläche.

Die Auswertungs-Einheit ist erfindungsgemäß ausgelegt,

∘ um die Schaltposition (i, j = THRU, ATN, GND, LOAD, OPEN) an der ersten Schalt-Einheit einzustellen bzw. zu ändern,
∘ um bei zumindest einer der Schaltpositionen (i, j = THRU, ATN, GND, LOAD, OPEN) die entsprechende Kenngröße ($s_{i,j}$) als einen ersten Abgleichsfaktor ($\hat{s}_{i,j}$) zu definieren,
∘ um die im Messbetrieb ermittelten Kenngrößen ($s_{i,j}$) mittels zumindest des einen ersten Abgleichsfaktors ($\hat{s}_{i,j}$) abzugleichen,
∘ und um anhand der abgeglichenen Kenngröße ($s'_{i,j}$) die Messgröße des Mediums zu bestimmen.

Der zentrale Vorteil dieser erfindungsgemäßen Art des Abgleichs besteht darin, dass hierdurch etwaige Verkopplungen der Verstärker kompensiert werden.

Unter dem Begriff *"Einheit"* wird im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Feldgerätes im Sinne der Erfindung potenziell auch auf einen gemeinsamen physikalischen Speicher zurückgreifen bzw. mittels derselben physikalischen Digitalschaltung betrieben werden.

Die Art der Kenngröße ($s_{i,j}$) hängt vom Typ der zu bestimmenden Messgröße ab. Je nach Typ der Messgröße muss die Auswertungs-Einheit ausgelegt sein, um als definierte Kenngröße ($s_{i,j}$) des Empfangs-Signals beispielsweise eine Phase bzw. Phasenverschiebung, eine Amplitude bzw. Amplitudenänderung, und/oder eine Signallaufzeit zu bestimmen. Auch die Auslegung der Antennen-Anordnung ist im Hinblick auf das erfindungsgemäße Feldgerät nicht fest vorgeschrieben, auch sie ist unter **anderem** vom Typ der zu bestimmenden Messgröße abhängig zu machen. Im Falle von transmittiver Dielektrizitätswert-Messung ist es vorteilhaft, wenn die Antennen-Anordnung eine Sende-Antenne zum Aussenden des Hochfrequenz-Signals und eine separate Empfangs-Antenne zum Empfang des Hochfrequenz-Signals nach Durchlaufen des Mediums umfasst. Im Falle von Füllstandsmessung ist es üblich, wenn die Antennen-Anordnung eine kombinierte Sende-/Empfangs-Antenne zum Aussenden und Empfangen des Hochfrequenz-Signals umfasst.

Diejenige Schaltposition (i, j = ATN), in welcher das Hochfrequenz-Signal durch das Dämpfungs-Element geleitet wird, entspricht bei Abgleichs-Verfahren nach dem Stand der Technik einer direkten elektrischen Verbindung zwischen dem Sende-Pfad und dem Empfangs-Pfad. Dementsprechend ist es im Sinne der Erfindung vorteilhaft, das Dämpfungs-Element derart zu bemessen, dass das erzeugte Hochfrequenz-Signal in Signal-Richtung hinter dem Sende-Verstärker bzw. vor dem Empfangs-Verstärker eine Dämpfung erfährt, welche den Verstärkungsfaktor des Sende-Verstärkers und/oder des Empfangs-Verstärkers kompensiert.

Damit der erfindungsgemäße Abgleich beispielsweise um einen SOLT-Abgleich erweiterbar ist, kann die erste Schalt-Einheit ausgelegt werden, zusätzlich eine derartige Schaltposition (i, j = LOAD) einzunehmen, so dass der von der Signalerzeugungs-Einheit ausgehende Sende-Pfad und/oder der zur Auswertungs-Einheit eingehende Empfangs-Pfad jeweils über einen Lastwiderstand auf Masse geschaltet sind/ist. Dabei ist es zur optionalen Integration einer Variante des SOLT-Verfahrens außerdem erforderlich, die erste Schalt-Einheit zu befähigen, eine derartige Schaltposition (i, j = GND) einzunehmen zu können, so dass der von der Signalerzeugungs-Einheit ausgehende Sende-Pfad und/oder der zur Auswertungs-Einheit eingehende Empfangs-Pfad jeweils auf Masse geschaltet sind/ist, wobei die Antennen-Anordnung bei dieser Schaltposition (i, j = GND) von der Signalerzeugungs-Einheit bzw. von der Auswertungs-Einheit getrennt ist. Außerdem muss die erste Schalt-Einheit im Fall eines ergänzenden SOLT-Abgleichs in der Lage sein, eine derartige Schaltposition (i, j = OPEN) einzunehmen, so dass der Sende-Pfad und/oder der Empfangs-Pfad komplett unterbrochen sind/ist.

Das erfindungsgemäße Verfahren umfasst zumindest folgende Verfahrensschritte:

- Schalten der ersten Schalt-Einheit auf zumindest diejenige Schaltposition (i, j = ATN), bei welcher

  ○ der Sende-Pfad über das Dämpfungs-Element mit dem Empfangs-Pfad verbunden ist und die Antennen-Anordnung von der Signalerzeugungs-Einheit bzw. von der Auswertungs-Einheit getrennt ist,

- Erzeugen des Hochfrequenz-Signals,
- Ermitteln der Kenngröße ($s_{i,j}$) anhand des Empfangs-Signals bei der jeweils aktuellen Schaltposition (i, j = ATN), und
- Bestimmung der zumindest einen ermittelten Kenngrößen ($s_{i,j}$) als einen ersten Abgleichsfaktor ($\hat{s}_{i,j}$).

Im Rahmen der Erfindung wir die erste Schalt-Einheit zur Bestimmung des entsprechenden ersten Abgleichs-faktors ($\hat{s}_{i,j}$) auch auf diejenige Schaltposition (i = THRU, j = ATN) geschaltet, bei welcher

  ○ die Signalerzeugungs-Einheit mit der Antennen-Anordnung verbunden ist (i = THRU) und der Empfangs-Pfad an das Dämpfungs-Element angeschlossen ist (j = ATN), oder bei welcher
  ○ der Sende-Pfad an das Dämpfungs-Element angeschlossen ist (i = ATN) und die Auswertungs-Einheit mit der Antennen-Anordnung verbunden ist.

In diesem Fall kann die im Messbetrieb ermittelte Kenngröße ($s_{THRU,THRU}$) gemäß

$$s'_{\mathrm{THRU,THRU}} = \frac{s_{THRU,THRU} - \hat{s}_{THRU,ATN}}{\hat{s}_{-ATN,ATN} - \hat{s}_{THRU,ATN}}$$

bzw. gemäß

$$s'_{\mathrm{THRU,THRU}} = \frac{s_{THRU,THRU} - \hat{s}_{ATN,THRU}}{\hat{s}_{ATN,ATN} - \hat{s}_{ATN,THRU}}$$

**sehr genau** abgeglichen werden.

Wenn die erste Schalt-Einheit auf die optional implementierbare Schaltposition (i, j = LOAD) geschaltet wird, bei welcher

  ○ der von der Signalerzeugungs-Einheit ausgehende Sende-Pfad und der zur Auswertungs-Einheit eingehende Empfangs-Pfad jeweils über einen Lastwiderstand auf Masse geschaltet sind,

und wenn die erste Schalt-Einheit zusätzlich auf diejenige Schaltposition (i = THRU, j = LOAD) geschaltet wird, bei welcher

○ die Signalerzeugungs-Einheit mit der Antennen-Anordnung verbunden ist (i = THRU) und der zur Auswertungs-Einheit eingehende Empfangs-Pfad über einen Lastwiderstand auf Masse geschaltet ist (j = LOAD),

kann die im Messbetrieb ermittelte Kenngröße ($s_{THRU,THRU}$) gemäß

$$s'_{THRU,THRU} = \frac{s_{THRU,THRU} - \hat{s}_{THRU,LOAD}}{\hat{s}_{ATN,ATN} - \hat{s}_{LOAD,LOAD}}$$

noch genauer abgeglichen werden.

Damit die im Messbetrieb ermittelte Kenngröße ($s_{THRU,THRU}$) zur Bestimmung der Messgröße zusätzlich zum erfindungsgemäßen Abgleichs-Verfahren auch mittels eines SOLT-Abgleichs korrigiert werden kann, ist es notwendig, dass die erste Schalt-Einheit unter Ermittlung der entsprechenden Kenngröße ($s_{GND,GND}$) auf diejenige Schaltposition (i, j = GND) geschaltet wird, bei welcher

○ der von der Signalerzeugungs-Einheit ausgehende Sende-Pfad und/oder der zur Auswertungs-Einheit eingehende Empfangs-Pfad jeweils auf Masse geschaltet sind/ist, wobei die Antennen-Anordnung bei dieser Schaltposition (i, j = GND) von der Signalerzeugungs-Einheit bzw. von der Auswertungs-Einheit getrennt ist.

Außerdem ist die erste Schalt-Einheit hierzu zuvor oder danach auf diejenige Schaltposition (i, j = OPEN) zu schalten, bei welcher

○ der Sende-Pfad und/oder der Empfangs-Pfad unterbrochen (i, j = OPEN) sind/ist.

Dabei sind bei beiden Schaltpositionen (i, j = GND), (i, j = OPEN) wiederum die entsprechenden Kenngrößen ($s_{OPEN,OPEN}$, $s_{GND,GND}$) zu ermitteln. Als Variante hiervon kann die im Messbetrieb ermittelte Kenngröße ($s_{THRU,THRU}$) erfindungsgemäß auch mittels einer modifizierten SOLT-Kalibrierung abgeglichen werden. Hierzu sind diejenigen Abgleichsfaktoren ($\hat{s}_{LOAD,LOAD}$; $\hat{s}_{THRU,LOAD}$; $\hat{s}_{LOAD,THRU}$), welche im Zuge des SOLT-Abgleichs normalerweise bei der Schaltstellung i, j = LOAD ermittelt würden, im Rahmen der Erfindung durch diejenigen Abgleichsfaktoren ($\hat{s}_{,THRU,ATN}$; $\hat{s}_{TATN,THRU}$; $\hat{s}_{ATN,ATN}$) zu ersetzen, welche bei den Schaltpositionen i = THRU; j = ATN und i = ATN; j = THRU bzw. i, j = ATN ermittelt werden.

Anhand der nachfolgenden Figuren wird die Erfindung näher erläutert. Es zeigt:

Fig. 1: Ein Radar-basiertes Füllstandsmessgerät an einem Behälter,

Fig. 2: ein Schaltbild des erfindungsgemäßen Messgerätes am Beispiel von transmittiver Dielektrizitätswert-Messung, und

Fig. 3: ein Verfahren zum Abgleich des erfindungsgemäßen Feldgerätes.

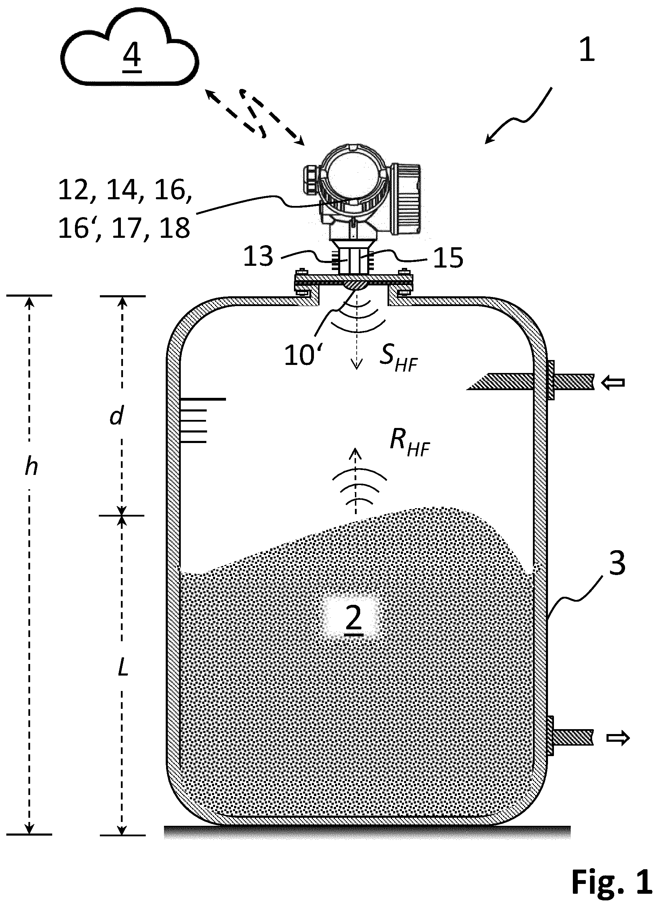

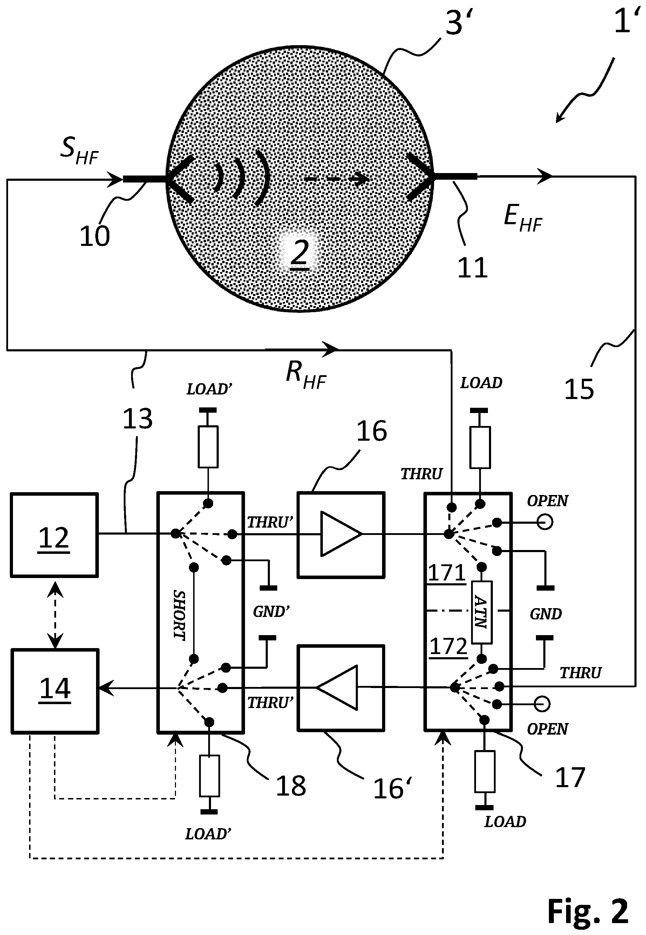

Das erfindungsgemäße Prinzip zum Abgleich hochfrequenz-basierter Feldgeräte 1, 1' kann beispielsweise bei Radar-basierter Füllstandsmessung oder bei transmittiver Dielektrizitätswert-Messung angewandt werden. Daher ist zum allgemeinen Verständnis solch Hochfrequenz-basierter Feldgeräte 1, 1' in Fig. 1 ein Radar-basiertes Füllstandsmessgerät 1 an einem Behälter 3 gezeigt. In Fig. 2 ist ein transmittiv arbeitendes Dielektrizitätswert-Messgerät 1' an einem Rohrleitungsabschnitt 3' dargestellt.

In dem bei Fig. 1 gezeigten Behälter 3 ist ein Medium 2 gelagert, wobei als Messgröße der Füllstand L des Mediums 2 zu bestimmen ist. Dabei kann es sich bei dem Medium 2 um Flüssigkeiten wie Getränke, Lacke, Zement oder Treibstoffe, wie Flüssiggase oder Mineralöle handeln. Denkbar ist jedoch auch die Verwendung des Füllstandsmessgerätes 1 bei Schüttgut-förmigen Medien 2, wie bspw. Getreide oder Kies. Je nach Anwendung und je nach Art des Mediums 2 ist der entsprechende Behälter 3 bis zu mehr als 100 m hoch. Um den Füllstand L ermitteln zu können, ist das Füllstandsmessgerät 1 in einer bekannten Einbauhöhe h oberhalb des Mediums 2 an einer entsprechenden Öffnung am Behälter 3 angebracht. Wie in Fig. 1 gezeigt ist, sind Feldgeräte 1, 1' in der Regel über eine Schnittstelle, etwa *"PROFIBUS"*, *"HART"* oder *"Wireless HART'* mit einer übergeordneten Einheit 4, wie z. B. einem Prozessleitsystem oder einer dezentralen Datenbank verbunden. Hierüber kann die ermittelte Messgröße L, DK übertragen werden, beispielsweise um gegebenenfalls Zu- oder Abflüsse des Behälters 3 zu steuern. Es können aber auch anderweitige Informationen über den allgemeinen Betriebszustand des Feldgerätes 1, 1' kommuniziert werden.

Am Behälter 3 ist das Füllstandsmessgerät 1 so ausgerichtet und befestigt, dass es Hochfrequenz-Signale $S_{HF}$ über eine Sende-/Empfangs-Antenne 10' in etwa entlang einer vertikal ausgerichteten Achse in Richtung der Oberfläche des Füllgutes 2 aussendet. Dabei wird das auszusendende Hochfrequenz-Signal $S_{HF}$ durch eine Signalerzeugungs-Einheit 12 des Füllstandsmessgerätes 1, beispielsweise gemäß des FMCW- oder gemäß des Pulslaufzeit-Prinzips, erzeugt und über einen Sende-Pfad 13 und eine anschließende Sende-/Empfangs-Weiche (nicht explizit dargestellt) der Sende-/Empfangs-Antenne 10' des Füllstandsmessgerätes 1 zugeführt.

Nach Reflektion an der Füllgut-Oberfläche werden die reflektierten Hochfrequenz-Signale $E_{HF}$ wiederum über die Sende-/Empfangs-Antenne 10' empfangen und im Anschluss über die Sende-/Empfangs-Weiche und einen nachfolgenden Empfangs-Pfad 15 einer Auswertungs-Einheit 14 des Füllstandsmessgerätes 1 zugeführt. Dabei ist die Signallaufzeit zwischen dem Aussenden des Hochfrequenz-Signals $S_{HF}$ und dem Empfang des an der Füllgut-Oberfläche reflektierten Hochfrequenz-Signals $E_{HF}$ proportional zum Abstand d zwischen dem Füllstandsmessgerät 1 und dem Medium 2. Da die Auswertungs-Einheit 14 auf Basis des FMCW- oder Pulslaufzeit-Prinzips als Kenngröße $s_{i,j}$ des Empfangs-Signals $E_{HF}$ zumindest indirekt die Signallaufzeit ermitteln kann, ist es möglich, beispielsweise auf Basis einer entsprechenden Kalibration die gemessene Signallaufzeit dem jeweiligen Abstand d zuordnen. Hierüber kann die Auswertungs-Einheit 14 des Füllstandsmessgerätes 1 gemäß

$$d = h - L$$

den Füllstand L bestimmen, sofern die Einbauhöhe h im Füllstandsmessgerät 1 hinterlegt ist.

In Fig. 2 ist eine Querschnittsansicht eines Rohrleitungsabschnittes 3' illustriert, wobei der Rohrleitungsabschnitt 3' von einem gasförmigen Medium 2 wie Propan, Stickstoff etc. oder von einem flüssigen Medium 2 wie Treibstoff, Getränken oder Abwässern mit feststoffartigen Sedimenten durchströmt wird. Als Messgröße ist bei der in Fig. 2 gezeigten Ausführungsvariante der Erfindung der Dielektrizitätswert DK des Mediums 2 zu bestimmen. Hierzu sind an der Innenwand des Rohrleitungsabschnittes 3 gegenüberliegend zueinander eine Sende-Antenne 10 und eine Empfangs-Antenne 11 angeordnet und zueinander ausgerichtet. Somit wird zwischen der resultierenden Antennen-Anordnung 10, 11 eine entsprechende Messstrecke ausgebildet, welche das Hochfrequenz-Signal $S_{HF}$ durch das Medium 2 hindurch zurücklegt.

Alternativ zu der in Fig. 2 gezeigten Ausführungsvariante des Dielektrizitätswert-Messgerätes 1' kann eine der Antennen 10, 11 des Dielektrizitätswert-Messgerätes 1' auch als kombinierte Sende-/Empfangs-Antenne 10' ausgelegt werden, während am Ort der anderen Antenne 10, 11 ein Reflektor für das Hochfrequenz-Signal $S_{HF}$, $E_{HF}$ angebracht wird. In diesem Fall ist die Sende-/Empfangs-Antenne 10' analog zu dem in Fig. 1 beschriebenen Füllstandsmessgerät 1 wiederum über eine Sende-/Empfangs-Weiche mit dem Sende-Pfad 13 bzw. dem Empfangs-Pfad 15 zu verbinden. Da das in Fig. 2 dargestellte Dielektrizitätswert-Messgerät 1' im Gegensatz zu dem in Fig. 1 gezeigten Füllstandsmessgerät 1 keine kombinierte Sende-/Empfangs-Antenne 10' umfasst, ist allerdings keine Sende-/Empfangs-Weiche erforderlich, um die Signalerzeugungs-Einheit 12 des Dielektrizitätswert-Messgerätes 1' über den Sende-Pfad 13 mit der Sende-Antenne 10 zu verbinden, bzw. um die Auswertungs-Einheit 14 über den Empfangs-Pfad 15 mit der Empfangs-Antenne 11 zu verbinden.

Im Gegensatz zu Füllstandsmessung ermittelt die Auswertungs-Einheit 14 des in Fig. 2 dargestellten Dielektrizitätswert-Messgerätes 1' als Messgröße $s_{i,j}$ die Phase und/oder die Amplitude des Empfangs-Signals $E_{HF}$, um hieraus den realwertigen, komplexwertigen oder betragsmäßigen Dielektrizitätswert DK des Mediums 2 zu bestimmen. Damit die Phase bzw. Amplitude auch relativ zum auszusendenden Hochfrequenz-Signal $S_{HF}$ ermittelt werden kann, ist die Auswertungs-Einheit 14 bei Bedarf entsprechend mit der Signalerzeugungs-Einheit 12 verschaltet, wie in Fig. 2 dargestellt ist. Dabei kann die Signalerzeugungs-Einheit 12 analog zu dem in Fig. 1 dargestellten Füllstandsmessgerät 1 beispielsweise auf einer PLL ("*Phase Locked Loop*") basieren.

Anhand von Fig. 2 wird verdeutlicht, dass sowohl transmittiv arbeitende Dielektrizitätswert-Messgeräte 1', als auch Radar-basierte Füllstandsmessgeräte 1 gewöhnlich zumindest einen Empfangs-Verstärker 16' umfassen, um Signal-Dämpfung innerhalb des Behälters 3 bzw. innerhalb des Mediums 2 zu kompensieren. Hierzu ist der Empfangs-Verstärker 16' im Empfangs-Pfad 15 zwischen der Empfangs-Antenne 11 und der Auswertungs-Einheit 14 angeordnet. Bei der in Fig. 2 gezeigten Ausführungsvariante umfasst das Dielektrizitätswert-Messgerät 1' zum gleichen Zweck außerdem einen Sende-Verstärker 16, der im Sende-Pfad 13 zwischen der Signalerzeugungs-Einheit 12 und der Sende-Antenne 10 angeordnet ist.

Problematisch an Verstärkern 16, 16' im Sende-Pfad 13 bzw. im Empfangs-Pfad 15 sind jedoch Verkopplungen und Frequenzgänge, welche das Empfangs-Signal $E_{HF}$ additiv überlagern und somit die Kenngröße $s_{i,j}$, also letztendlich den Füllstandswert L oder den Dielektrizitätswert DK verfälschen. Bekannte Abgleichs-Verfahren, wie das LMR16-Verfahren sind diesbezüglich jedoch nur bedingt geeignet.

Wie anhand von Fig. 2 gezeigt ist, umfasst das erfindungsgemäße, Hochfrequenz-basierte Feldgerät 1, 1' zur Kompensation etwaiger Verkopplungen, die auf die Verstärker 16, 16' zurückzuführen sind, eine erste Schalt-Einheit 17.

Dabei setzt sich die erste Schalt-Einheit 17 aus zwei unabhängig voneinander aktuierbaren Schaltern 171, 172 zusammen, welche beispielsweise als SP4T-Schalter realisiert sein können und jeweils von der Auswertungs-Einheit 14 gesteuert werden: Ein erster Schalter 171 ist im Sende-Pfad 13 in Signal-Richtung des Hochfrequenz-Signals $S_{HF}$ hinter dem Sende-Verstärker 16 bzw. vor der Sende-Antenne 10 angeordnet. Der zweite Schalter 172 ist im Empfangs-Pfad 15 - wiederum in Signalrichtung hinter der Empfangs-Antenne 11 bzw. vor der Auswertungs-Einheit 14 angeordnet.

Dabei erfolgt die Kompensation mittels eines Abgleichs-Verfahrens, das nach dem Zusammenbau des Gerätes 1, 1' bzw. vor dem eigentlichen Messbetrieb durchgeführt wird. Hierzu erzeugt die Signalerzeugungs-Einheit 12 zunächst das Hochfrequenz-Signal $S_{HF}$. Dabei wird unter definierten Schaltpositionen i, j = TRHU, LOAD, OPEN, GND, ATN von der Auswertungs-Einheit 14 die entsprechende Kenngröße $s_{i,j}$ ermittelt. Dabei kann die Auswertungs-Einheit 14 für den Fall, dass der Dielektrizitätswert DK zu bestimmen ist, als Kenngröße $s_{i,j}$ vorzugsweise die Amplitude oder Phase des Empfangs-Signals $E_{HF}$ (ggf. in Bezug zum auszusendenden Hochfrequenz-Signal $S_{HF}$) ermitteln. Im Falle des Füllstandes L bietet sich insbesondere an, als Kenngröße $s_{i,j}$ beispielsweise mittels des Pulslaufzeit- oder des FMCW-Prinzips die Signallaufzeit des Hochfrequenz-Signals $S_{HF}$, $E_{HF}$ zu bestimmen.

Diejenigen Kenngrößen $s_{i,j}$, die bei den entsprechenden Schaltpositionen i, j = TRHU, LOAD, OPEN, GND, ATN ermittelt wurden, definiert die Auswertungs-Einheit 14 wiederum als Abgleichsfaktoren $\hat{s}_{i,j}$. Dabei wird die im späteren Messbetrieb ermittelte Kenngröße $s_{THRU,THRU}$, auf deren Basis die Messgröße L, DK bestimmt wird, durch Subtraktion bzw. Division mit dem zumindest einen ersten Abgleichsfaktor $\hat{s}_{i,j}$ kompensiert.

Wie in Fig. 2 dargestellt wird, können beide Schalter 171, 172 zur Bestimmung der Messgröße L, DK bzw. zur Bestimmung des ersten Abgleichsfaktor $\hat{s}_{i,j}$ jeweils unabhängig voneinander fünf verschiedene Schaltpositionen i, j = THRU, LOAD, OPEN, GND und ATN einnehmen:

- In der grundlegenden Schaltposition i, j = THRU ist der erste Schalter 171 so gestellt, dass die Signalerzeugungs-Einheit 12 mit der Sende-Antenne 10 der Antennen-Anordnung 10, 11 verbunden ist. Der zweite Schalter 172 verbindet die Auswertungs-Einheit 14 bei Einnahme dieser Schaltposition THRU mit der Empfangs-Antenne 11. In dieser Schaltposition THRU können während des Messbetriebs die eigentlichen Füllstands- bzw. Dielektrizitätswert-Messungen durchgeführt werden, sofern beide Schalter 171, 172 in dieser Position THRU geschaltet sind. Das heißt, das von der Signalerzeugungs-Einheit 12 erzeugte Hochfrequenz-Signal $S_{HF}$ wird über den Sende-Pfad 13, über die Antennen 10, 11 (also durch das Medium 2 hindurch) und anschließend über den Empfangs-Pfad 15 der Auswertungs-Einheit 14 zugeführt, um aus dem empfangenen Hochfrequenz-Signal $E_{HF}$ die jeweilige Kenngröße $s_{THRU,THRU}$ zu ermitteln bzw. um hieraus - nach Abgleich der Kenngröße $s_{THRU,THRU}$ mit dem Abgleichsfaktor $\hat{s}_{i,j}$ - wiederum die Messgröße DK, L zu bestimmen. Alternativ, als beispielsweise sofern lediglich einer der Schalter 171, 172 auf THRU geschaltet ist, kann anhand der entsprechenden Kenngröße $s_{i,THRU}$, $s_{THRU,j}$ wiederum der entsprechende erste **Abgleichsfaktor** $\hat{s}_{THRU,THRU}$, $\hat{s}_{THRU,j}$, $\hat{s}_{i,THRU}$ definiert werden.

- In der Schaltposition i, j = ATN, die zur Durchführung des erfindungsgemäßen Abgleichs-Verfahrens wesentlich ist, wird der Sende-Pfad 13 über den ersten Schalter 171 an ein Dämpfungs-Element angeschlossen. Der gegenüberliegende Kontakt des Dämpfungs-Elementes kann vom zweiten Schalter 172 bei dieser Schaltposition ATN mit dem Empfangs-Pfad 15 verbunden werden. Die Antennen-Anordnung 10, 11 ist bei dieser Schaltposition ATN von der Signalerzeugungs-Einheit 12 bzw. von der Auswertungs-Einheit 14 elektrisch getrennt. Hierdurch ist die Auswertungs-Einheit 14 über die Schalter 171, 172 und die Verstärker 16, 16' mit der Signalerzeugungs-Einheit 12 verbunden, sofern sich beide Schalter 171, 172 in dieser Schaltposition i, j = ATN.
Hierdurch ermöglicht die Schaltposition i, j = ATN einen Referenzpfad des Hochfrequenz-Signals $S_{HF}$, $E_{HF}$ zwischen der Signalerzeugungs-Einheit 12 und der Auswertungs-Einheit 14, der nicht über die Messstrecke bzw. durch das Medium 2 führt. Dabei ist der Wert des Dämpfungs-Elementes vorzugsweise so auszulegen, dass der resultierende Verstärkungsfaktor der Verstärker 16, 16' an der Auswertungs-Einheit 14 kompensiert wird. Im vorliegenden Fall entspricht dies einer Dämpfung von ca. 60dB. Hierzu kann das Dämpfungs-Element mittels entsprechender Widerstände bzw. mittels entsprechender Kapazitäten realisiert, oder als PI-Regler werden. Genutzt wird diese Schaltposition i, j = ATN im Rahmen des erfindungsgemäßen Abgleichs: Hierbei wird das erzeugte Hochfrequenz-Signal $S_{HF}$ im Zuge des Abgleichs-Verfahrens über den entsprechend verkürzten Signal-Pfad 13, 15 der Auswertungs-Einheit 14 zugeführt, um in dieser Schaltposition i, j = ATN aus dem empfangenen Hochfrequenz-Signal $E_{HF}$ die korrespondierende Kenngröße $s_{ATN,ATN}$ zu ermitteln. Sofern lediglich einer der Schalter 171, 172 in diese Schaltposition i = ATN; j = THRU oder i = THRU; j = ATN geschaltet ist, können hierdurch etwaige Koppelpfade, die sich Layout-bedingt zwischen dem Sende-Pfad 13 und dem Empfangs-Pfad 15 ergeben, kompensiert werden.

- Eine optionale Schaltposition i, j = OPEN der Schalt-Einheit 17 ermöglicht es, dass der erste Sende-Pfad 13 vom ersten Schalter 171 unterbrochen wird, und/oder dass der Empfangs-Pfad 15 vom zweiten Schalter 172 unterbrochen wird. Hierdurch wird eine für das Hochfrequenz-Signal $S_{HF}$, $E_{HF}$ reflektierender Abschluss gebildet. Auch diese Schaltposition i,j = OPEN kann im Rahmen des Abgleichs-Verfahrens genutzt werden, um bei dieser Schaltposition i,j = OPEN aus dem resultierenden Empfangs-Signal $E_{HF}$ an der Auswertungs-Einheit 14 die korrespondierende Kenngröße $s_{OPEN,j}$, $s_{i,OPEN}$, $s_{OPEN,OPEN}$ jeweils als ersten Abgleichsfaktor $\hat{s}_{i,j}$ zu ermitteln.

- Entgegen der offenen Schaltposition i, j = OPEN kann der erste Sende-Pfad 13 vom ersten Schalter 171 in einer weiteren optionalen Schaltposition i, j = GND auf ein Massepotential gezogen werden; Auch am zweiten Schalter 172 kann diese Schaltposition i, j = GND eingestellt werden, wodurch der zur Auswertungs-Einheit 14 führende Empfangs-Pfad 15 vom zweiten Schalter 172 wiederum auf das Massepotential gezogen wird. Hierdurch wird ein Abschluss gebildet, welcher das Hochfrequenz-Signal $S_{HF}$, $E_{HF}$ mit einer Phasendrehung von 180° reflektiert. Genutzt werden kann diese Schaltposition i, j = GND wiederum im Rahmen des Abgleichs-Verfahrens, wonach das erzeugte Hochfrequenz-Signal $S_{HF}$ auf Masse geleitet wird und/oder die Auswertungs-Einheit 14 in dieser Schaltposition i, j = GND die entsprechende Kenngröße $s_{GND,j}$, $s_{i,GND}$, $s_{GND,GND}$ bei geerdetem Empfangs-Pfad 15 ermittelt und ggf. als erste Abgleichsfaktoren $\hat{s}_{i,j}$ bestimmt.

- Analog zu der Schaltposition i, j = GND wird der erste Sende-Pfad 13 vom ersten Schalter 171 in einer optionalen, weiteren Schaltposition i, j = LOAD nicht direkt, sondern über einen Lastwiderstand auf Massepotential gezogen. Auch am zweiten Schalteer 172 kann diese Schaltposition i, j = LOAD eingestellt werden, wodurch der zur der Auswertungs-Einheit 14 eingehende Empfangs-Pfad 15 vom zweiten Schalter 172 wiederum über einen Lastwiderstand auf Masse gezogen wird. Durch diese Schaltposition i, j = LOAD wird ein für das Hochfrequenz-Signal $S_{HF}$, $E_{HF}$ Reflektions-freier Abschluss gebildet. Innerhalb des Abgleichs-Verfahrens kann auch diese Schaltposition i, j = LOAD genutzt werden, um die jeweils korrespondierende Kenngröße $s_{LOAD,j}$, $s_{i,LOAD}$, $s_{LOAD,LOAD}$ als Abgleichsfaktoren $\hat{s}_{i,j}$ zu bestimmen. In Kombination mit den Schaltpositionen i, j = GND und i, j = OPEN kann die Auswertungs-Einheit 14 mittels dieser Schaltposition i, j = LOAD eine nach dem Stand der Technik als *"SOLT ("SHORT, OPEN, LOAD, THROGH)"* bekannte Kalibrierung durchführen.

Aufgrund der erfindungsgemäßen Schaltposition i, j = ATN ist es jedoch auch möglich, die SOL-Kalibrierung zu modifizieren, indem diejenigen ersten Abgleichsfaktoren ($\hat{s}_{LOAD,LOAD}$; $\hat{s}_{THRU,LOAD}$; $\hat{s}_{LOAD,THRU}$) der SOL-Kalibration, die üblicherweise bei der Schaltstellung i, j = LOAD ermittelten werden, durch solche erste Abgleichsfaktoren ($\hat{s}_{THRU,ATN}$; $\hat{s}_{TATN,THRU}$; $\hat{s}_{ATN,ATN}$) ersetzt werden, welche bei den Schaltpositionen i = THRU; j = ATN und i = ATN; j = THRU bzw. i, j = ATN ermittelt werden. In diesem Fall kann die im darauffolgenden Messbetrieb ermittelte Kenngröße $s_{THRU,THRU}$ gemäß der entsprechend modifizierten SOL-Kalibrierung abgeglichen werden. Vorteilhaft hieran ist, dass keine Lastwiderstände bzw. die Schaltposition i, j = LOAD erforderlich sind. Mittels der (modifizierten) SOL-Kalibration ist es möglich, etwaige Fehler, die durch Reflektion des Hochfrequenz-Signal $S_{HF}$, $E_{HF}$ zwischen der ersten Schalt-Einheit 17 und der Signalerzeugungs-Einheit 12 bzw. der Auswertungs-Einheit 14 bedingt sind, zu kompensieren. Allerdings können mittels des SOL-Kalibration keine Verkopplungen zwischen den Verstärkern 16, 16', welche das Empfangs-Signal $E_{HF}$ additiv überlagern, kompensiert werden.

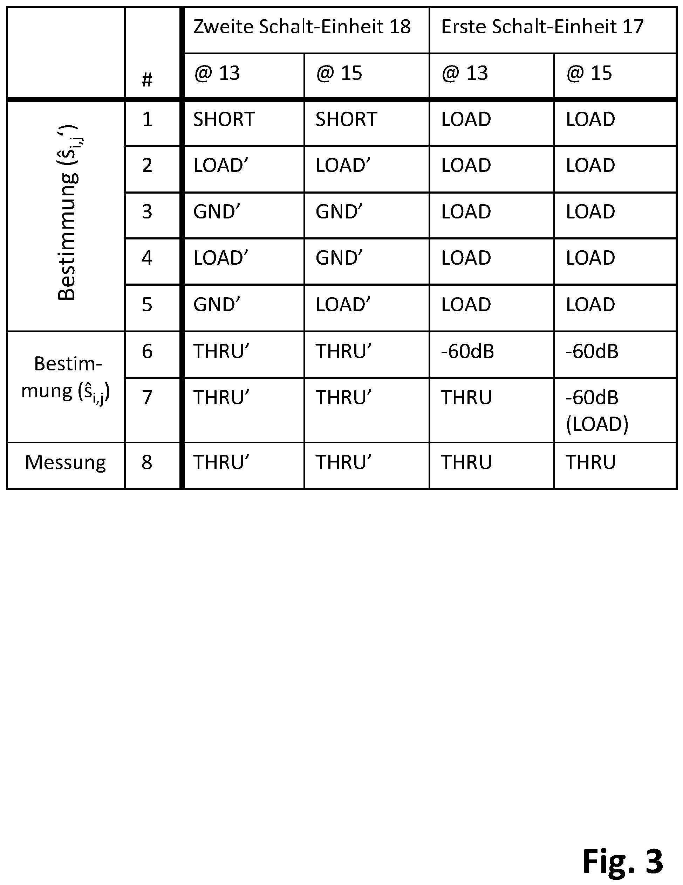

Eine mögliche Variante des erfindungsgemäßen Abgleichs-Verfahrens, mittels dem auch diese Einflussgrößen kompensiert werden können, wird anhand von Fig. 3 näher erläutert. Kern des erfindungsgemäßen Abgleichs-Verfahrens sind dabei die Verfahrens-Schritte 6 und 7, in denen jeweils entsprechende erste Abgleichsfaktoren $\hat{s}_{ATN,ATN}$, $\hat{s}_{ATN,THRU}$, $\hat{s}_{THRU,ATN}$ bestimmt werden: In Verfahrens-Schritt 6 werden sowohl der erste Schalter 171, als auch der zweite Schalter 172 zunächst auf die Schaltposition i, j = ATN geschaltet. In dieser Schaltposition i, j = ATN bestimmt die Auswertungs-Einheit 14 die entsprechende Kenngröße $s_{ATN,ATN}$. Hierzu generiert die Signalerzeugungs-Einheit 12 zumindest währenddessen das Hochfrequenz-Signal $S_{HF}$. Die erfasste Kenngröße $s_{ATN,ATN}$ wird als erster Abgleichsfaktor $\hat{s}_{ATN,ATN}$ abgespeichert

Im anschließenden Verfahrens-Schritt 7 stellt die Auswertungs-Einheit 14 den ersten Schalter 171 auf die Schaltposition i = THRU um, während der zweite Schalter 172 in der Schaltposition j = ATN verbleibt. Auch bei dieser Schaltposition i = THRU, j = ATN wird unter Erzeugung des Hochfrequenz-Signals $S_{HF}$ die entsprechende Kenngröße $s_{THRU,ATN}$ erfasst und als erster Abgleichsfaktor $\hat{s}_{THRU,ATN}$ abgespeichert. Hierdurch kann die im späteren Messbetrieb ermittelte Kenngröße $s_{THRU,THRU}$, die zur Bestimmung der Messgröße L, DK dient, jeweils gemäß

$$s'_{THRU,THRU} = \frac{s_{THRU,THRU} - \hat{s}_{THRU,ATN}}{\hat{s}_{ATN,ATN} - \hat{s}_{THRU,ATN}}$$

abgeglichen werden.

Alternativ hierzu ist es in Verfahrensschritt 7 auch möglich, nicht den ersten Schalter 171 auf die Schaltposition i = THRU umzustellen, sondern den zweiten Schalter 172 j = THRU, während der erste Schalter 171 auf Schaltposition i = ATN verbleibt. In diesem Fall kann die Auswertungs-Einheit 14 im regulären Messbetrieb die Kenngröße $s_{THRU,THRU}$ zur Bestimmung der Messgröße L, DK ermitteln und gemäß

$$s'_{THRU,THRU} = \frac{s_{THRU,THRU} - \hat{s}_{ATN,THRU}}{\hat{s}_{ATN,ATN} - \hat{s}_{ATN,THRU}}$$

kompensieren.

Sofern in der ersten Schalt-Einheit 17 Lastwiderstände bzw. die Schaltposition i,j = LOAD implementiert ist, kann der zweite Schalter 172 in Verfahrensschritt 7 in einer dritten Variante auf die Schaltposition j = LOAD gestellt werden, während der erste Schalter 171 auf der Schaltposition i = THRU verbleibt. Die hierunter ermittelte Kenngröße $s_{THRU,LOAD}$ kann wiederum als erster **Abgleichsfaktor** $\hat{s}_{THRU,LOAD}$ hinterlegt werden. Bei dieser Variante ist es zur Kompensation der Verstärker 16, 16' jedoch zusätzlich nötig, neben den Verfahrens-Schritten 6 und 7 beide Schalter 171, 172 der ersten Schalt-Einheit 17 in einem weiteren Verfahrensschritt (einer der Verfahrens-Schritte 1 bis 5 in Fig. 3) auf die Schaltposition i, j = LOAD zu schalten, um die entsprechende Kenngröße $s_{LOAD,LOAD}$ bzw. den entsprechenden ersten Abgleichsfaktor $\hat{s}_{LOAD,LOAD}$ zu ermitteln. In diesem Fall kann die für die Bestimmung der Messgröße L, DK relevante Kenngröße $s_{THRU,THRU}$ im Messbetrieb jeweils gemäß

$$s'_{THRU,THRU} = \frac{s_{THRU,THRU} - \hat{s}_{THRU,LOAD}}{\hat{s}_{ATN,ATN} - \hat{s}_{LOAD,LOAD}}$$

abgeglichen werden.

Aus den obigen Formeln zur Bestimmung der abgeglichenen Kenngröße $s'_{THRU,THRU}$ wird allgemein deutlich, dass es im Rahmen der Erfindung nicht relevant ist, mit welcher Reihenfolge die Verfahrensschritte 1-5 bzw. 6 und 7 durchgeführt werden.

Wie aus Fig. 2 und Fig. 3 hervorgeht, kann das erfindungsgemäße Abgleichs-Verfahren bzw. die ersten Schalt-Anordnung 17 mit einem bekannten Abgleichs-Verfahren, wie dem LMR16- oder SOLT-Verfahren ergänzt werden, um die jeweilige Messgröße L, DK noch genauer abgleichen zu können. Wie aus Fig. 2 hervorgeht, umfasst das dortige Dielektrizitätswert-Messgerät 1' daher zusätzlich eine zweite Schalt-Einheit 18. Diese ist im Sende-Pfad 13 zwischen der Sende-Einheit 12 und dem Sende-Verstärker 16 bzw. im Empfangs-Pfad 15 zwischen dem Empfangs-Verstärker 16' und der Auswertungs-Einheit 14 angeordnet. Dabei kann die zweite Schalt-Einheit 18 analoge Schaltpositionen zur ersten Schalt-Einheit 17 einnehmen:

- THRU'
- SHORT
- LOAD'
- GND'.

Dabei entsprechenden diese Schaltpositionen i, j = THRU', SHORT, LOAD', GND' bis auf Schaltposition i, j = SHORT den Schaltpositionen i, j = THRU, ATN, LOAD, GND der ersten Schalt-Einheit 17: Im Gegensatz zu der Schaltposition ATN an der ersten Schalt-Einheit 17 ist in der zweiten Schalt-Einheit 18 bei Anliegen der Schaltposition i, j = SHORT kein Dämpfungs-Element zwischen dem Sende-Pfad 13 und dem Empfangs-Pfad 15 angeordnet, so dass diese kurzgeschlossen werden. Dabei wird auch die zweite Schalt-Einheit 18 von der Auswertungs-Einheit 14 gesteuert. Zwar können mittels der zweiten Schalt-Einheit 18 keine Einflüsse der Verstärker 16, 16' kompensiert werden. Jedoch ist es möglich, das LMR16-Verfahren anzuwenden, wie es den Verfahrens-Schritten 1 bis 5 in Fig. 3 entspricht, um hieraus entsprechende, zweite Abgleichsfaktoren $\hat{s}_{i,j}'$ abzuleiten. In diesem Fall ist es möglich, die im Messbetrieb ermittelte Kenngröße $s_{THRU,THRU}$ **nicht** nur mittels der ersten Abgleichsfaktoren $\hat{s}_{i,j}$, sondern zusätzlich auch mittels der zweiten Abgleichsfaktoren $\hat{s}_{i,j}'$ abzugleichen. Durch die Ergänzung des erfindungsgemäßen Abgleichs-Verfahrens durch das LMR16-Verfahren ergibt sich dementsprechend als Synergie-Effekt, dass alle Schaltungs-Komponenten 12, 13, 14, 15, 16, 16', 17, 18 des Feldgerätes 1, 1' abgeglichen werden.

**Bezugszeichenliste**

- 1    Füllstandsmessgerät
- 1'   Dielektrizitätswert-Messgerät
- 2    Medium
- 3    Behälter
- 3'   Rohrleitungsabschnitt
- 4    Übergeordnete Einheit

| 10 | Sende-Antenne |
|----|----|
| 10' | Sende-/Empfangs-Antenne |
| 11 | Empfangs-Antenne |
| 12 | Signalerzeugungs-Einheit |
| 13 | Sende-Pfad |
| 14 | Auswertungs-Einheit |
| 15 | Empfangs-Pfad |
| 16 | Sende-Verstärker |
| 16' | Empfangs-Verstärker |
| 17 | Erste Schalt-Einheit |
| 18 | Zweite Schalt-Einheit |
| 171 | Erster Schalter |
| 172 | Zweiter Schalter |
| DK | Dielektrizitätswert |
| d | Abstand |
| $E_{HF}$ | Empfangenes Hochfrequenz-Signal |
| h | Einbauhöhe |
| i, j | Indizes der Schalter-Stellungen |
| L | Füllstand |
| $S_{HF}$ | Hochfrequenz-Signal |
| $\hat{s}_{i,j}$ | Kenngröße |
| $s'_{i,j}$ | Abgeglichene Kenngröße |
| $\hat{s}_{i,j}$ | Abgleichsfaktoren |

**Patentansprüche**

1. **Verfahren** zum Abgleich eines Hochfrequenz-basierten Feldgerätes (1, 1'), das zur Bestimmung einer Messgröße (L, DK) eines Mediums (2) in einem Behälter (3, 3') dient und folgende Komponenten umfasst:

   - Eine derart am Behälter (3) anbringbare Antennen-Anordnung (10, 10', 11), um

     o ein Hochfrequenz-Signal ($S_{HF}$) gen Medium (2) auszusenden, und
     o um nach Interaktion mit dem Medium (2) ein Empfangs-Signal ($E_{HF}$) zu empfangen,

   - eine Signalerzeugungs-Einheit (12), die ausgelegt ist, um das auszusendende Hochfrequenz-Signal ($S_{HF}$) zu erzeugen und über einen Sende-Pfad (13) der Antennen-Anordnung (10, 10') zuzuführen,
   - Eine Auswertungs-Einheit (14), welche über einen Empfangs-Pfad (15) derart mit der Antennen-Anordnung (10', 11) verbunden ist, um zumindest anhand des eingehenden Empfangs-Signals ($E_{HF}$)

     o eine Phase bzw. Phasenverschiebung,
     o eine Amplitude und/oder
     o eine Signallaufzeit

   als eine definierte Kenngröße ($s_{i,j}$) zu bestimmen,
   - einen im Sende-Pfad (13) angeordneten Sende-Verstärker (16) und/oder einen im Empfangs-Pfad (15) angeordneten Empfangs-Verstärker (16'),
   - eine erste Schalt-Einheit (17), welche zwischen der Antennen-Anordnung (10, 10', 11) und dem Sende-Verstärker (16) im Sende-Pfad (13) bzw. dem Empfangs-Verstärker (16') im Empfangs-Pfad (15) angeordnet ist, wobei die erste Schalt-Einheit (17) ausgelegt ist, derartige Schaltpositionen (i, j = THRU, ATN, GND, LOAD, OPEN) einzunehmen,

     o so dass die Signalerzeugungs-Einheit (12) und/oder die Auswertungs-Einheit (14) jeweils mit der Antennen-Anordnung (10, 10', 11) verbunden sind/ist (i, j = THRU), und
     o so dass der Sende-Pfad (13) und/oder der Empfangs-Pfad (15) an ein Dämpfungs-Element, über welches der Sende-Pfad (13) mit dem Empfangs-Pfad (15) verbindbar ist, angeschlossen sind/ist (i, j = ATN), wobei die Antennen-Anordnung (10, 10', 11) bei dieser Schaltposition (i, j = ATN) von der Signalerzeugungs-Einheit (12) bzw. von der Auswertungs-Einheit (14) getrennt ist,

wobei die Auswertungs-Einheit (14) ausgelegt ist,

    ○ um die Schaltposition (i, j = THRU, ATN, GND, LOAD, OPEN) an der ersten Schalt-Einheit (17) einzustellen,
    ○ und um bei zumindest einer der Schaltpositionen (i, j = THRU, ATN, GND LOAD) die entsprechende Kenngröße ($s_{i,j}$) als einen ersten Abgleichsfaktor ($\hat{s}_{i,j}$) zu bestimmen,
    ○

- folgende Verfahrensschritte umfassend:Schalten der ersten Schalt-Einheit (17) auf zumindest auf diejenige Schaltposition (i, j= ATN), bei welcher der Sende-Pfad (13) über das Dämpfungs-Element mit dem Empfangs-Pfad (15) verbunden ist und die Antennen-Anordnung (10, 10', 11) von der Signalerzeugungs-Einheit (12) bzw. von der Auswertungs-Einheit (14) getrennt ist,
- Ermitteln der Kenngröße ($s_{ATN,ATN}$) anhand des Empfangs-Signals ($E_{HF}$) bei der aktuellen Schaltposition (i, j = ATN), und
- Bestimmung der zumindest einen ermittelten Kenngröße ($s_{ATN,\ ATN}$) als einen ersten Abgleichsfaktor ($\hat{s}_{ATN,\ ATN}$),

wobei die erste Schalt-Einheit (17) auf diejenige Schaltposition (i = THRU, j = ATN) geschaltet wird, bei welcher

    ○ die Signalerzeugungs-Einheit (12) mit der Antennen-Anordnung (10, 10') verbunden ist (i = THRU) und der Empfangs-Pfad (15) an das Dämpfungs-Element angeschlossen ist (j = ATN),

und/oder wobei die erste Schalt-Einheit (17) auf diejenige Schaltposition (i = ATN, j = THRU) geschaltet wird, bei welcher

    ○ der Sende-Pfad (13) an das Dämpfungs-Element angeschlossen ist (i = ATN) und die Auswertungs-Einheit (14) mit der Antennen-Anordnung (10', 11) verbunden ist (j = THRU),

**dadurch gekennzeichnet, dass** dass die Auswertungs-Einheit (14) ausgelegt ist,

- um eine im Messbetrieb ermittelte Kenngröße ($s_{THRU,THRU}$) mittels zumindest des einen ersten Abgleichsfaktors ($\hat{s}_{i,j}$) abzugleichen,
- und um anhand der abgeglichenen Kenngröße ($s'_{THRU,THRU}$) die Messgröße (L, DK) des Mediums (2) zu bestimmen,

wobei die im Messbetrieb ermittelte Kenngröße ($s_{THRU,THRU}$) gemäß

$$s'_{THRU,THRU} = \frac{s_{THRU,THRU} - \hat{s}_{THRU,ATN}}{\hat{s}_{ATN,ATN} - \hat{s}_{THRU,ATN}}$$

bzw. gemäß

$$s'_{THRU,THRU} = \frac{s_{THRU,THRU} - \hat{s}_{ATN,THRU}}{\hat{s}_{ATN,ATN} - \hat{s}_{ATN,THRU}}$$

abgeglichen wird.

2.   Verfahren nach Anspruch 1, wobei die erste Schalt-Einheit (17) auf diejenige Schaltposition (i, j = LOAD) geschaltet wird, bei welcher

    ○ der von der Signalerzeugungs-Einheit (12) ausgehende Sende-Pfad (13) und der zur Auswertungs-Einheit (14) eingehende Empfangs-Pfad (15) jeweils über einen Lastwiderstand auf Masse geschaltet sind,
und wobei die erste Schalt-Einheit (17) auf diejenige Schaltposition (i = THRU, j = LOAD) geschaltet wird, bei welcher

    ○ die Signalerzeugungs-Einheit (12) mit der Antennen-Anordnung (10, 10') verbunden ist (i = THRU) ist und der zur Auswertungs-Einheit (14) eingehende Empfangs-Pfad (15) über einen Lastwiderstand auf Masse geschaltet ist (j = LOAD), und

wobei die im Messbetrieb ermittelte Kenngröße ($s_{THRU,THRU}$) gemäß

$$s'_{THRU,THRU} = \frac{s_{THRU,THRU} - \hat{s}_{THRU,LOAD}}{\hat{s}_{ATN,ATN} - \hat{s}_{LOAD,LOAD}}$$

abgeglichen wird, sofern die erste Schalt-Einheit (17) ausgelegt ist, eine derartige Schaltposition (i, j = LOAD) einzunehmen, so dass der von der Signalerzeugungs-Einheit (12) ausgehende Sende-Pfad (13) und/oder der zur Auswertungs-Einheit (14) eingehende Empfangs-Pfad (15) jeweils über einen Lastwiderstand auf Masse geschaltet sind/ist.

3. Verfahren nach Anspruch 1 oder 2, wobei die erste Schalt-Einheit (17) auf diejenige Schaltposition (i, j = GND) geschaltet wird, bei welcher

○ der von der Signalerzeugungs-Einheit (12) ausgehende Sende-Pfad (13) und/oder der zur Auswertungs-Einheit (14) eingehende Empfangs-Pfad (15) jeweils auf Masse geschaltet sind/ist, wobei die Antennen-Anordnung (10, 10', 11) bei dieser Schaltposition (i, j = GND) von der Signalerzeugungs-Einheit (12) bzw. von der Auswertungs-Einheit (14) getrennt ist, und wobei die erste Schalt-Einheit (17) auf diejenige Schaltposition (i, j = OPEN) geschaltet wird, bei welcher

○ der Sende-Pfad (13) und/oder der Empfangs-Pfad (15) unterbrochen (i, j = OPEN) sind/ist, und

wobei die im Messbetrieb ermittelte Kenngröße ($s_{THRU,THRU}$) entsprechend einer SOL-Kalibrierung abgeglichen wird, oder wobei die im Messbetrieb ermittelte Kenngröße ($s_{THRU,THRU}$) entsprechend einer modifizierten SOL-Kalibrierung derart abgeglichen wird, dass die regulär bei der Schaltstellung i, j = LOAD ermittelten Abgleichsfaktoren ($\hat{s}_{LOAD,LOAD}$; $\hat{s}_{THRU,LOAD}$; $\hat{s}_{LOAD,THRU}$) durch diejenigen Abgleichsfaktoren ($\hat{s}_{,THRU,ATN}$; $\hat{s}_{ATN,THRU}$; $\hat{s}_{ATN,ATN}$) ersetzt werden, welche bei den Schaltpositionen i = THRU; j = ATN und i = ATN j = THRU bzw. i, j = ATN ermittelt sind, sofern die erste Schalt-Einheit (17) ausgelegt ist, eine derartige Schaltposition (i, j = GND) einzunehmen, so dass der von der Signalerzeugungs-Einheit (12) ausgehende Sende-Pfad (13) und/oder der zur Auswertungs-Einheit (14) eingehende Empfangs-Pfad (15) jeweils auf Masse geschaltet sind/ist, wobei die Antennen-Anordnung (10, 10', 11) bei dieser Schaltposition (i, j = GND) von der Signalerzeugungs-Einheit (12) bzw. von der Auswertungs-Einheit (14) getrennt ist.

4. Hochfrequenz-basiertes Feldgerät (1, 1') zur Durchführung des Verfahrens nach einem der vorhergehenden Ansprüche, folgende Komponenten umfassend:

- Eine derart am Behälter (3) anbringbare Antennen-Anordnung (10, 10', 11), um

○ ein Hochfrequenz-Signal ($S_{HF}$) gen Medium (2) auszusenden, und ○ um nach Interaktion mit dem Medium (2) ein Empfangs-Signal ($E_{HF}$) zu empfangen,

- eine Signalerzeugungs-Einheit (12), die ausgelegt ist, um das auszusendende Hochfrequenz-Signal ($S_{HF}$) zu erzeugen und über einen Sende-Pfad (13) der Antennen-Anordnung (10, 10') zuzuführen, - Eine Auswertungs-Einheit (14), welche über einen Empfangs-Pfad (15) derart mit der Antennen-Anordnung (10', 11) verbunden ist, um zumindest anhand des eingehenden Empfangs-Signals ($E_{HF}$)

○ eine Phase bzw. Phasenverschiebung, ○ eine Amplitude und/oder ○ eine Signallaufzeit

als eine definierte Kenngröße ($s_{i,j}$) zu bestimmen, - einen im Sende-Pfad (13) angeordneten Sende-Verstärker (16) und/oder einen im Empfangs-Pfad (15) angeordneten Empfangs-Verstärker (16'), - eine erste Schalt-Einheit (17), welche zwischen der Antennen-Anordnung (10, 10', 11) und dem Sende-Verstärker (16) im Sende-Pfad (13) bzw. dem Empfangs-Verstärker (16') im Empfangs-Pfad (15) angeordnet ist, wobei die erste Schalt-Einheit (17) ausgelegt ist, derartige Schaltpositionen (i, j = THRU, ATN, GND, LOAD, OPEN) einzunehmen,

○ so dass die Signalerzeugungs-Einheit (12) und/oder die Auswertungs-Einheit (14) jeweils mit der Antennen-Anordnung (10, 10', 11) verbunden sind/ist (i, j = THRU), und

○ so dass der Sende-Pfad (13) und/oder der Empfangs-Pfad (15) an ein Dämpfungs-Element, über welches der Sende-Pfad (13) mit dem Empfangs-Pfad (15) verbindbar ist, angeschlossen sind/ist (i, j = ATN), wobei die Antennen-Anordnung (10, 10', 11) bei dieser Schaltposition (i, j = ATN) von der Signalerzeugungs-Einheit (12) bzw. von der Auswertungs-Einheit (14) getrennt ist,

wobei die Auswertungs-Einheit (14) ausgelegt ist,

○ um die Schaltposition (i, j = THRU, ATN, GND, LOAD, OPEN) an der ersten Schalt-Einheit (17) einzustellen,

○ **um bei zumindest** einer der Schaltpositionen (i, j = THRU, ATN, GND, LOAD) die entsprechende Kenngröße ($s_{i,j}$) als einen ersten Abgleichsfaktor ($\hat{s}_{i,j}$) zu bestimmen,

○ um eine im Messbetrieb ermittelte Kenngröße ($s_{THRU,THRU}$) mittels zumindest des einen ersten Abgleichsfaktors ($\hat{s}_{i,j}$) abzugleichen,

○ und um anhand der abgeglichenen Kenngröße ($s'_{THRU,THRU}$) die Messgröße (L, DK) des Mediums (2) zu bestimmen,

5. Feldgerät nach Anspruch 4, wobei es sich bei der Messgröße um einen Füllstand (L) oder einen Dielektrizitätswert (DK) bzw. eine hieraus ableitbare Messgröße handelt.

6. Feldgerät nach einem der Ansprüche 4 oder 5, wobei die Antennen-Anordnung (10, 10', 11) eine Sende-Antenne (10) zum Aussenden des Hochfrequenz-Signals ($S_{HF}$) und eine Empfangs-Antenne (11) zum Empfang des Hochfrequenz-Signals ($E_{HF}$) nach Durchlaufen des Mediums (2) umfasst,
oder wobei die Antennen-Anordnung (10, 10', 11) eine kombinierte Sende-/Empfangs-Antenne (10') zum Aussenden und Empfangen des Hochfrequenz-Signals ($S_{HF}$, $E_{HF}$) umfasst.

7. Feldgerät nach einem der Ansprüche 4 bis 6, wobei das Dämpfungs-Element derart bemessen ist, dass das erzeugte Hochfrequenz-Signal ($S_{HF}$) hinter dem Sende-Verstärker (16) bzw. vor dem Empfangs-Verstärker (16') eine Dämpfung erfährt, welche dem Verstärkungsfaktor des Sende-Verstärkers (16) und/oder des Empfangs-Verstärkers (16') entspricht.

8. Feldgerät nach einem der Ansprüche 4 bis 7, wobei die erste Schalt-Einheit (17) ausgelegt ist, eine derartige Schaltposition (i, j = LOAD) einzunehmen, so dass der von der Signalerzeugungs-Einheit (12) ausgehende Sende-Pfad (13) und/oder der zur Auswertungs-Einheit (14) eingehende Empfangs-Pfad (15) jeweils über einen Lastwiderstand auf Masse geschaltet sind/ist.

9. Feldgerät nach einem der Ansprüche 4 bis 8, wobei die erste Schalt-Einheit (17) ausgelegt ist, eine derartige Schaltposition (i, j = GND) einzunehmen, so dass der von der Signalerzeugungs-Einheit (12) ausgehende Sende-Pfad (13) und/oder der zur Auswertungs-Einheit (14) eingehende Empfangs-Pfad (15) jeweils auf Masse geschaltet sind/ist, wobei die Antennen-Anordnung (10, 10', 11) bei dieser Schaltposition (i, j = GND) von der Signalerzeugungs-Einheit (12) bzw. von der Auswertungs-Einheit (14) getrennt ist.

10. Feldgerät nach einem der Ansprüche 4 bis 9, wobei die erste Schalt-Einheit (17) ausgelegt ist, eine derartige Schaltposition (i, j = OPEN) einzunehmen, so dass der Sende-Pfad (13) und/oder der Empfangs-Pfad (15) unterbrochen sind/ist.

**Claims**

1. A method for calibrating a high-frequency-based field device (1, 1') which is intended to determine a measured variable (L, DK) of a medium (2) in a container (3, 3') and comprises the following components:

- An antenna assembly (10, 10', 11) which can be fitted to the container (3) in order to

○ emit a high-frequency signal ($S_{HF}$) toward the medium (2), and

○ receive a receive signal ($E_{HF}$) following interaction with the medium (2),

- a signal generating unit (12) which is configured to generate the high-frequency signal ($S_{HF}$) to be emitted and to transmit it to the antenna assembly (10, 10') via a transmission path (13),
- an evaluation unit (14) which is connected to the antenna assembly (10', 11) via a reception path (15) in order to determine, based at least on the incoming receive signal (EHF),

    ◦ a phase or phase shift,
    ◦ an amplitude, and/or
    ◦ a signal duration

as a defined characteristic variable ($s_{i,j}$),

    - a transmission amplifier (16) arranged in the transmission path (13) and/or a reception amplifier (16') arranged in the reception path (15),
    - a first switching unit (17) which is arranged between the antenna assembly (10, 10', 11) and the transmission amplifier (16) in the transmission path (13) or between the antenna assembly (10, 10', 11) and the reception amplifier (16') in the reception path (15), wherein the first switching unit (17) is configured to adopt such switching positions (i, j = THRU, ATN, GND, LOAD, OPEN)

        ◦ that the signal generating unit (12) and/or the evaluation unit (14) is/are connected to the antenna assembly (10, 10', 11) in each case (i, j = THRU), and
        ◦ that the transmission path (13) and/or the reception path (15) is/are connected to a damping element via which the transmission path (13) can be connected to the reception path (15) (i, j = ATN), wherein the antenna assembly (10, 10', 11) is separated from the signal generating unit (12) or from the evaluation unit (14) in this switching position (i, j = ATN),

wherein the evaluation unit (14) is configured

    ◦ to set the switching position (i, j = THRU, ATN, GND, LOAD, OPEN) at the first switching unit (17),
    ◦ and to determine the corresponding characteristic variable ($s_{i,j}$) as a first calibration factor ($ŝ_{i,j}$) in at least one of the switching positions (i, j = THRU, ATN, GND, LOAD),
    - comprising the following process steps: Switching the first switching unit (17) to at least that switching position (i, j = ATN) in which the transmission path (13) is connected to the reception path (15) via the damping element and the antenna assembly (10, 10', 11) is separated from the signal generating unit (12) or from the evaluation unit (14),
    - determining the characteristic variable ($s_{ATN, ATN}$) based on the receive signal ($E_{HF}$) in the current switching position (i, j = ATN), and
    - ascertaining the at least one determined characteristic variable ($s_{ATN, ATN}$) as a first calibration factor ($s_{ATN, ATN}$),

wherein the first switching unit (17) is switched to that switching position (i = THRU, j = ATN) in which

    ◦ the signal generating unit (12) is connected to the antenna assembly (10, 10') (i = THRU) and the reception path (15) is connected to the damping element (j = ATN),

and/or wherein the first switching unit (17) is switched to that switching position (i = ATN, j = THRU) in which

    ◦ the transmission path (13) is connected to the damping element (i = ATN) and the evaluation unit (14) is connected to the antenna assembly (10', 11) (j = THRU),

**characterized in that** the evaluation unit (14) is configured

    - to calibrate a characteristic variable ($s_{THRU,THRU}$) determined in measuring mode using at least the one first calibration factor ($ŝ_{i,j}$),
    - and to determine the measured variable (L, DK) of the medium (2) based on the calibrated characteristic variable ($s'_{THRU,THRU}$),

wherein the characteristic variable ($s_{THRU,THRU}$) determined in measuring mode is calibrated in accordance with

$$s'_{THRU,THRU} = \frac{s_{THRU,THRU} - \hat{s}_{THRU,ATN}}{\hat{s}_{ATN,ATN} - \hat{s}_{THRU,ATN}}$$

or in accordance with

$$s'_{THRU,THRU} = \frac{s_{THRU,THRU} - \hat{s}_{ATN,THRU}}{\hat{s}_{ATN,ATN} - \hat{s}_{ATN,THRU}}$$

2. The method as claimed in claim 1, wherein the first switching unit (17) is switched to that switching position (i, j = LOAD) in which

○ the transmission path (13) leading from the signal generating unit (12) and the reception path (15) leading to the evaluation unit (14) are in each case switched to ground via a load resistor,

and wherein the first switching unit (17) is switched to that switching position (i = THRU, j = LOAD) in which

○ the signal generating unit (12) is connected to the antenna assembly (10, 10') (i = THRU) and the reception path (15) leading to the evaluation unit (14) is switched to ground via a load resistor (j = LOAD), and

wherein the characteristic variable ($s_{THRU,THRU}$) determined in measuring mode is calibrated in accordance with

$$s'_{THRU,THRU} = \frac{s_{THRU,THRU} - \hat{s}_{THRU,LOAD}}{\hat{s}_{ATN,ATN} - \hat{s}_{LOAD,LOAD}}$$

if the first switching unit (17) is configured to adopt such a switching position (i, j = LOAD) that the transmission path (13) leading from the signal generating unit (12) and/or the reception path (15) leading to the evaluation unit (14) is/are in each case switched to ground via a load resistor.

3. The method as claimed in claim 1 or 2, wherein the first switching unit (17) is switched to that switching position (i, j = GND) in which

○ the transmission path (13) leading from the signal generating unit (12) and/or the reception path (15) leading to the evaluation unit (14) is/are in each case switched to ground, wherein the antenna assembly (10, 10', 11) is separated from the signal generating unit (12) or from the evaluation unit (14) in this switching position (i, j = GND), and
wherein the first switching unit (17) is switched to that switching position (i, j = OPEN) in which

○ the transmission path (13) and/or the reception path (15) is/are interrupted (i, j = OPEN), and

wherein the characteristic variable ($s_{THRU,THRU}$) determined in measuring mode is calibrated according to an SOL calibration, or
wherein the characteristic variable ($s_{THRU,THRU}$) determined in measuring mode is calibrated according to a modified SOL calibration in such a way that the calibration factors ($\hat{s}_{LOAD,LOAD}$; $\hat{s}_{THRU,LOAD}$; $\hat{s}_{LOAD,THRU}$) determined in the regular manner in the switching position i, j = LOAD are replaced by those calibration factors ($\hat{s}_{THRU,ATN}$; $\hat{s}_{ATN,THRU}$; $\hat{s}_{ATN,ATN}$) that are determined in the switching positions i = THRU; j = ATN and i = ATN j = THRU or i, j = ATN if the first switching unit (17) is configured to adopt such a switching position (i, j = GND) that the transmission path (13) leading from the signal generating unit (12) and/or the reception path (15) leading to the evaluation unit (14) is/are in each case switched to ground, wherein the antenna assembly (10, 10', 11) is separated from the signal generating unit (12) or from the evaluation unit (14) in this switching position (i, j = GND).

4. The high-frequency-based field device (1, 1') for carrying out the method as claimed in one of the preceding claims, comprising the following components:

- An antenna assembly (10, 10', 11) which can be fitted to the container (3) in order to

∘ emit a high-frequency signal ($S_{HF}$) toward the medium (2), and
∘ receive a receive signal ($E_{HF}$) following interaction with the medium (2),

- a signal generating unit (12) which is configured to generate the high-frequency signal ($S_{HF}$) to be emitted and to transmit it to the antenna assembly (10, 10') via a transmission path (13),
- an evaluation unit (14) which is connected to the antenna assembly (10', 11) via a reception path (15) in order to determine, based at least on the incoming receive signal (EHF),

∘ a phase or phase shift,
∘ an amplitude, and/or
∘ a signal duration

as a defined characteristic variable ($s_{i,j}$),
- a transmission amplifier (16) arranged in the transmission path (13) and/or a reception amplifier (16') arranged in the reception path (15),
- a first switching unit (17) which is arranged between the antenna assembly (10, 10', 11) and the transmission amplifier (16) in the transmission path (13) or between the antenna assembly (10, 10', 11) and the reception amplifier (16') in the reception path (15), wherein the first switching unit (17) is configured to adopt such switching positions (i, j = THRU, ATN, GND, LOAD, OPEN)

∘ that the signal generating unit (12) and/or the evaluation unit (14) is/are connected to the antenna assembly (10, 10', 11) in each case (i, j = THRU), and
∘ that the transmission path (13) and/or the reception path (15) is/are connected to a damping element via which the transmission path (13) can be connected to the reception path (15) (i, j = ATN), wherein the antenna assembly (10, 10', 11) is separated from the signal generating unit (12) or from the evaluation unit (14) in this switching position (i, j = ATN),

wherein the evaluation unit (14) is configured

∘ to set the switching position (i, j = THRU, ATN, GND, LOAD, OPEN) at the first switching unit (17),
∘ to determine the corresponding characteristic variable ($s_{i,j}$) as a first calibration factor ($\hat{s}_{i,j}$) in at least one of the switching positions (i, j = THRU, ATN, GND, LOAD),
∘ to calibrate a characteristic variable ($s_{THRU,THRU}$) determined in measuring mode using at least the one first calibration factor ($\hat{s}_{i,j}$),
∘ and to determine the measured variable (L, DK) of the medium (2) based on the calibrated characteristic variable ($s'_{THRU,THRU}$),

5. The field device as claimed in claim 4, wherein the measured variable is a fill level (L) or a dielectricity value (DK), or a measured variable which can be derived therefrom.

6. The field device as claimed in either of claims 4 or 5, wherein the antenna assembly (10, 10', 11) comprises a transmitting antenna (10) for emitting the high-frequency signal ($S_{HF}$) and a receiving antenna (11) for receiving the high-frequency signal ($E_{HF}$) once it has passed through the medium (2),
or wherein the antenna assembly (10, 10', 11) comprises a combined transmitting/receiving antenna (10') for emitting and receiving the high-frequency signal ($S_{HF}$, $E_{HF}$).

7. The field device as claimed in one of claims 4 to 6, wherein the damping element is dimensioned in such a way that the generated high-frequency signal ($S_{HF}$) undergoes damping downstream of the transmission amplifier (16) or upstream of the reception amplifier (16'), which corresponds to the amplification factor of the transmission amplifier (16) and/or the reception amplifier (16').

8. The field device as claimed in one of claims 4 to 7, wherein the first switching unit (17) is configured to adopt such a switching position (i, j = LOAD) that the transmission path (13) leading from the signal generating unit (12) and/or the reception path (15) leading to the evaluation unit (14) is/are in each case switched to ground via a load resistor.

9. The field device as claimed in one of claims 4 to 8, wherein the first switching unit (17) is configured to adopt such a switching position (i, j = GND) that the transmission path (13) leading from the signal generating unit (12) and/or the reception path (15) leading to the evaluation unit (14) is/are in each case switched to ground, wherein the antenna assembly (10, 10', 11) is separated from the signal generating unit (12) or from the evaluation unit (14) in this switching position (i, j = GND).

**10.** The field device as claimed in one of claims 4 to 9, wherein the first switching unit (17) is configured to adopt such a switching position (i, j = OPEN) that the transmission path (13) and/or the reception path (15) is/are interrupted.


**Revendications**

**1.** Procédé destiné à l'étalonnage d'un appareil de terrain (1, 1') basé sur la haute fréquence, lequel appareil sert à déterminer une grandeur de mesure (L, DK) d'un produit (2) dans un réservoir (3, 3'), lequel appareil comprend les composants suivants :

- un agencement d'antennes (10, 10', 11) pouvant être monté sur le réservoir (3), lequel agencement est destiné

  ○ à émettre un signal haute fréquence ($S_{HF}$) vers le produit (2), et
  ○ à recevoir un signal de réception ($E_{HF}$) après interaction avec le produit (2),

- une unité de génération de signaux (12), laquelle est conçue pour générer le signal haute fréquence ($S_{HF}$) à émettre et pour l'acheminer à l'agencement d'antennes (10, 10') par l'intermédiaire d'un chemin d'émission (13),
- une unité d'évaluation (14), laquelle est reliée à l'agencement d'antennes (10', 11) par l'intermédiaire d'un chemin de réception (15), de telle sorte à déterminer, au moins à l'aide du signal de réception ($E_{HF}$) entrant,

  ○ une phase ou un déphasage,
  ○ une amplitude et/ou
  ○ un temps de propagation du signal

en tant que grandeur caractéristique ($s_{i,j}$) définie,
- un amplificateur d'émission (16) disposé dans le chemin d'émission (13) et/ou un amplificateur de réception (16') disposé dans le chemin de réception (15),
- une première unité de commutation (17), laquelle est disposée entre l'agencement d'antennes (10, 10', 11) et l'amplificateur d'émission (16) dans le chemin d'émission (13) ou l'amplificateur de réception (16') dans le chemin de réception (15), la première unité de commutation (17) étant conçue pour prendre des positions de commutation (i, j = THRU, ATN, GND, LOAD, OPEN) de telle sorte

  ○ que l'unité de génération de signaux (12) et/ou l'unité d'évaluation (14) sont/est connectées (i, j = THRU) respectivement à l'agencement d'antennes (10, 10', 11), et
  ○ que le chemin d'émission (13) et/ou le chemin de réception (15) sont/est connecté(s) (i, j = ATN) à un élément d'amortissement par lequel le chemin d'émission (13) peut être relié au chemin de réception (15), l'agencement d'antennes (10, 10', 11) étant séparé de l'unité de génération de signaux (12) ou de l'unité d'évaluation (14) dans cette position de commutation (i, j = ATN),

l'unité d'évaluation (14) étant conçue,

  ○ pour régler la position de commutation (i, j = THRU, ATN, GND, LOAD, OPEN) sur la première unité de commutation (17),
  ○ et pour déterminer, pour au moins l'une des positions de commutation (i, j = THRU, ATN, GND, LOAD), la grandeur caractéristique ($s_{i,j}$) correspondante en tant que premier facteur d'étalonnage ($\hat{s}_{i,j}$),

- lequel procédé comprend les étapes suivantes : commutation de la première unité de commutation (17) au moins sur la position de commutation (i, j = ATN) dans laquelle le chemin d'émission (13) est relié au chemin de réception (15) par l'intermédiaire de l'élément d'amortissement et l'agencement d'antennes (10, 10', 11) est séparé de l'unité de génération de signaux (12) ou de l'unité d'évaluation (14),
- Détermination de la grandeur caractéristique ($s_{ATN,ATN}$) à l'aide du signal de réception (EHF) pour la position de commutation actuelle (i, j = ATN), et
- Détermination de l'au moins une grandeur caractéristique ($s_{ATN,ATN}$) déterminée comme premier facteur d'étalonnage (($\hat{s}_{ATN,ATN}$),
la première unité de commutation (17) étant commutée sur la position de commutation (i = THRU, j = ATN) dans laquelle

◦ l'unité de génération de signaux (12) est reliée à l'agencement d'antennes (10, 10') (i = THRU) et le chemin de réception (15) est connecté à l'élément d'amortissement (j = ATN),

et/ou la première unité de commutation (17) étant commutée sur la position de commutation (i = ATN, j = THRU) dans laquelle

◦ le chemin d'émission (13) est connecté à l'élément d'amortissement (i = ATN) et l'unité d'évaluation (14) est reliée à l'agencement d'antennes (10', 11) (j = THRU),

**caractérisé en ce que** l'unité d'évaluation (14) est conçue

- pour étalonner une grandeur caractéristique ($s_{THRU,THRU}$) déterminée en mode de mesure au moyen d'au moins le premier facteur d'étalonnage ($\hat{s}_{i,j}$),
- et pour déterminer la grandeur de mesure (L, DK) du produit (2) à l'aide de la grandeur caractéristique étalonnée ($s'_{THRU,THRU}$),

la grandeur caractéristique ($s_{THRU,THRU}$) déterminée en mode de mesure étant étalonnée selon la formule suivante :

$$s'_{THRU,THRU} = \frac{s_{THRU,THRU} - \hat{s}_{THRU,ATN}}{\hat{s}_{ATN,ATN} - \hat{s}_{THRU,ATN}}$$

ou la formule suivante :

$$s'_{THRU,THRU} = \frac{s_{THRU,THRU} - \hat{s}_{ATN,THRU}}{\hat{s}_{ATN,ATN} - \hat{s}_{ATN,THRU}}.$$

2. Procédé selon la revendication 1, pour lequel la première unité de commutation (17) est commutée sur la position de commutation (i, j = LOAD) dans laquelle

o le chemin d'émission (13) partant de l'unité de génération de signaux (12) et le chemin de réception (15) parvenant à l'unité d'évaluation (14) sont respectivement commutés à la masse par l'intermédiaire d'une résistance de charge,
et la première unité de commutation (17) étant commutée sur la position de commutation (i = THRU, j = LOAD) dans laquelle

◦ l'unité de génération de signaux (12) est reliée (i = THRU) à l'agencement d'antennes (10, 10') et le chemin de réception (15) parvenant à l'unité d'évaluation (14) est commuté à la masse par l'intermédiaire d'une résistance de charge (j = LOAD), et

la grandeur caractéristique ($s_{THRU,THRU}$) déterminée en mode de mesure étant étalonnée selon la formule suivante :

$$s'_{THRU,THRU} = \frac{s_{THRU,THRU} - \hat{s}_{THRU,LOAD}}{\hat{s}_{ATN,ATN} - \hat{s}_{LOAD,LOAD}},$$

dans la mesure où la première unité de commutation (17) est conçue pour prendre une position de commutation (i, j = LOAD) de telle sorte que le chemin d'émission (13) partant de l'unité de génération de signaux (12) et/ou le chemin de réception (15) parvenant à l'unité d'évaluation (14) sont/est respectivement commuté(s) à la masse par l'intermédiaire d'une résistance de charge.

3. Procédé selon la revendication 1 ou 2,

pour lequel la première unité de commutation (17) est commutée sur la position de commutation (i, j = GND) dans laquelle

◦ le chemin d'émission (13) partant de l'unité de génération de signaux (12) et/ou le chemin de réception (15) parvenant à l'unité d'évaluation (14) sont/est respectivement commutés à la masse, l'agencement d'antennes (10, 10', 11) étant séparé de l'unité de génération de signaux (12) ou de l'unité d'évaluation (14) dans cette position de commutation (i, j = GND), et

pour lequel la première unité de commutation (17) étant commutée sur la position de commutation (i, j = OPEN) dans laquelle

◦ le chemin d'émission (13) et/ou le chemin de réception (15) est/sont interrompu(s) (i, j = OPEN), et

la grandeur caractéristique déterminée en mode de mesure étant étalonnée conformément à un étalonnage SOL, ou
la grandeur caractéristique ($s_{THRU,THRU}$) déterminée en mode de mesure étant étalonnée conformément à un étalonnage SOL modifié, de telle sorte que les facteurs d'étalonnage ($ŝ_{LOAD,LOAD}$ ; $ŝ_{THRU,LOAD}$ ; $ŝ_{LOAD,THRU}$) déterminés régulièrement pour la position de commutation i, j = LOAD soient remplacés par les facteurs d'étalonnage ($ŝ_{THRU,ATN}$ ; $ŝ_{ATN,THRU}$ ; $ŝ_{ATN,ATN}$), lesquels sont déterminés pour les positions de commutation i = THRU ; j = ATN et i = ATN j = THRU ou i, j = ATN,
dans la mesure où la première unité de commutation (17) est conçue pour prendre une position de commutation (i, j = GND) de telle sorte que le chemin d'émission (13) partant de l'unité de génération de signaux (12) et/ou le chemin de réception (15) parvenant à l'unité d'évaluation (14) sont/est respectivement commuté(s) à la masse, l'agencement d'antennes (10, 10', 11) étant, dans cette position de commutation (i, j = GND), séparé de l'unité de génération de signaux (12) ou de l'unité d'évaluation (14).

4. Appareil de terrain (1, 1') basé sur la haute fréquence, lequel est destiné à la mise en œuvre du procédé selon l'une des revendications précédentes, lequel appareil comprend les composants suivants :

- un agencement d'antennes (10, 10', 11) pouvant être monté sur le réservoir (3) de manière

◦ à émettre un signal haute fréquence ($S_{HF}$) vers le produit (2), et
◦ à recevoir un signal de réception ($E_{HF}$) après interaction avec le produit (2),

- une unité de génération de signaux (12), laquelle est conçue pour générer le signal haute fréquence ($S_{HF}$) à émettre et l'acheminer à l'agencement d'antennes (10, 10') par l'intermédiaire d'un chemin d'émission (13),
- une unité d'évaluation (14), laquelle est reliée à l'agencement d'antennes (10', 11) par l'intermédiaire d'un chemin de réception (15) de manière à déterminer, au moins à l'aide du signal de réception ($E_{HF}$) entrant

◦ une phase ou un déphasage
◦ une amplitude et/ou
◦ un temps de propagation du signal

en tant que grandeur caractéristique ($s_{i,j}$) définie,
- un amplificateur d'émission (16) disposé dans le chemin d'émission (13) et/ou un amplificateur de réception (16') disposé dans le chemin de réception (15),
- une première unité de commutation (17), laquelle est disposée entre l'agencement d'antennes (10, 10', 11) et l'amplificateur d'émission (16) dans le chemin d'émission (13) ou l'amplificateur de réception (16') dans le chemin de réception (15), la première unité de commutation (17) étant conçue pour prendre des positions de commutation (i, j = THRU, ATN, GND, LOAD, OPEN),

◦ de telle sorte que l'unité de génération de signaux (12) et/ou l'unité d'évaluation (14) sont/est reliée(s) respectivement à l'agencement d'antennes (10, 10', 11) (i, j = THRU), et
◦ de telle sorte que le chemin d'émission (13) et/ou le chemin de réception (15) est relié à un élément d'amortissement, par l'intermédiaire duquel le chemin d'émission (13) peut être relié au chemin de réception (15) (i, j = ATN), l'agencement d'antennes (10, 10', 11) étant, dans cette position de commutation (i, j = ATN), séparé de l'unité de génération de signaux (12) ou de l'unité de d'évaluation (14),

l'unité d'évaluation (14) étant conçue,

◦ pour régler la position de commutation (i, j = THRU, ATN, GND, LOAD, OPEN) sur la première unité de commutation (17),
◦ pour déterminer, pour au moins l'une des positions de commutation (i, j = THRU, ATN, GND, LOAD), la grandeur caractéristique ($s_{i,j}$) correspondante en tant que premier facteur d'étalonnage ($\hat{s}_{i,j}$),
◦ pour étalonner une grandeur caractéristique ($s_{THRU,THRU}$) déterminée en mode de mesure au moyen d'au moins le premier facteur d'étalonnage ($\hat{s}_{i,j}$),
◦ et pour déterminer la grandeur de mesure (L, DK) du produit (2) à l'aide de la grandeur caractéristique étalonnée ($s'_{THRU,THRU}$).

5. Appareil de terrain selon la revendication 4, pour lequel la grandeur de mesure est un niveau (L) ou une valeur diélectrique (DK) ou une grandeur de mesure pouvant en être déduite.

6. Appareil de terrain selon l'une des revendications 4 ou 5,

pour lequel l'agencement d'antennes (10, 10', 11) comprend une antenne d'émission (10) pour émettre le signal haute fréquence ($S_{HF}$) et une antenne de réception (11) pour recevoir le signal haute fréquence ($E_{HF}$) après passage dans le produit (2), ou
pour lequel l'agencement d'antennes (10, 10', 11) comprend une antenne combinée d'émission/réception (10') pour émettre et recevoir le signal haute fréquence ($S_{HF}$, $E_{HF}$).

7. Appareil de terrain selon l'une des revendications 4 à 6, pour lequel l'élément d'amortissement est dimensionné de telle sorte que le signal haute fréquence ($S_{HF}$) généré en aval de l'amplificateur d'émission (16) ou en amont de l'amplificateur de réception (16') subit une atténuation qui correspond au facteur d'amplification de l'amplificateur d'émission (16) et/ou de l'amplificateur de réception (16').

8. Appareil de terrain selon l'une des revendications 4 à 7, pour lequel la première unité de commutation (17) est conçue pour prendre une position de commutation (i, j = LOAD) de telle sorte à commuter respectivement à la masse, via une résistance de charge, le chemin d'émission (13) partant de l'unité de génération de signaux (12) et/ou le chemin de réception (15) parvenant à l'unité d'évaluation (14).

9. Appareil de terrain selon l'une des revendications 4 à 8, pour lequel la première unité de commutation (17) est conçue pour prendre une position de commutation (i, j = GND) de telle sorte à commuter respectivement à la masse le chemin d'émission (13) partant de l'unité de génération de signaux (12) et/ou le chemin de réception (15) parvenant à l'unité d'évaluation (14), l'agencement d'antennes (10, 10', 11) étant, dans cette position de commutation (i, j = GND), séparé de l'unité de génération de signaux (12) ou de l'unité d'évaluation (14).

10. Appareil de terrain selon l'une des revendications 4 à 9, pour lequel la première unité de commutation (17) est conçue pour prendre une position de commutation (i, j = OPEN) de telle sorte à interrompre le chemin d'émission (13) et/ou le chemin de réception (15).

12, 14, 16,
16', 17, 18

13

15

10'

$S_{HF}$

$R_{HF}$

$h$

$d$

$L$

1

4

2

3

**Fig. 1**

**Fig. 2**

| | # | Zweite Schalt-Einheit 18 | | Erste Schalt-Einheit 17 | |
|---|---|---|---|---|---|
| | | @ 13 | @ 15 | @ 13 | @ 15 |
| Bestimmung ($\hat{s}_{i,j}'$) | 1 | SHORT | SHORT | LOAD | LOAD |
| | 2 | LOAD' | LOAD' | LOAD | LOAD |
| | 3 | GND' | GND' | LOAD | LOAD |
| | 4 | LOAD' | GND' | LOAD | LOAD |
| | 5 | GND' | LOAD' | LOAD | LOAD |
| Bestim-mung ($\hat{s}_{i,j}$) | 6 | THRU' | THRU' | -60dB | -60dB |
| | 7 | THRU' | THRU' | THRU | -60dB (LOAD) |
| Messung | 8 | THRU' | THRU' | THRU | THRU |

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012104858 A1
- DE 102013108490 A1
- DE 102014107249 A1
- DE 102017130728 A1

**In der Beschreibung aufgeführte Nicht-Patentliteratur**

- *Radar Level Detection, Peter Devine,*, 2000
- **K. SILVONEN**. LMR16 - A Self Calibration Procedure for a Leaky Network Analyzer. *IEEE TRANSACTIONS ON MCIROWAVE THEORY AND TECHNIQUES*, July 1997, vol. 7
- **W. KRUPPA** ; **K. F. SODOMSKY**. An Explicit Solution for the Scattering Parameters of a Linear Two-Port Measured with an Imperfect Test Set (Correspondence). *IEEE TRANSACTIONS ON MCIROWAVE THEORY AND TECHNIQUES*, January 1971, vol. 19 (1), 122-123